# EUROPEAN PATENT APPLICATION

(11) **EP 4 708 526 A1**
(43) Date of publication of application: **11.03.2026**
(21) Application number: 25195265.1
(22) Date of filing: 12.08.2025
(51) Int. Cl.: H01M 50/30, H01M 50/333, H01M 50/367, H01M 50/655, H01M 50/15

(54) **SECONDARY BATTERY AND SECONDARY BATTERY MODULE INCLUDING SAME**

(30) Priority: 09.09.2024 KR 20240122557
(71) Applicant: Samsung SDI Co., Ltd., Yongin-si, Gyeonggi-do 17084 (KR)
(72) Inventor: LEE, Jiho, Yongin-si, Gyeonggi-do 17084 (KR); KIM, Ryeongah, Yongin-si, Gyeonggi-do 17084 (KR)
(74) Representative: Gulde & Partner

(57) **Abstract**

A secondary battery (1), including an electrode assembly (50) including a first electrode (300), a second electrode (302), and a separator (304), a case (20) configured to accommodate the electrode assembly (50), the case (20) having one opening, a cap plate (11) coupled to the one opening of the case (20), the cap plate (11) including an injection port (12) into which an electrolyte is injected, and a gas discharge portion (100) coupled to the injection port (12) of the cap plate (11), the gas discharge portion (100) configured to discharge gas generated inside the case (20).

## Description

### BACKGROUND

### 1. Field

The present disclosure relates to a secondary battery and a secondary battery module including the same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

The invention is defined by the appended claims. The description that follows is subjected to this limitation. Any disclosure lying outside the scope of said claims is only intended for illustrative as well as comparative purposes.

Embodiments include a secondary battery, including an electrode assembly including a first electrode, a second electrode, and a separator, a case configured to accommodate the electrode assembly, the case having an opening, a cap plate coupled to the opening of the case, the cap plate including an injection port into which an electrolyte is injected (e. g. can be injected), and a gas discharge portion coupled (e. g. connected) to the injection port of the cap plate, the gas discharge portion configured to discharge gas generated inside the case. This may allow generated gas to be released from an interior (inside) of the secondary battery into an environment (outside) of the secondary battery. The generated gas may flow through the gas discharge portion to the injection port where it exits the secondary battery. The cap plate may seal (e. g. cover) the opening of the case.

According to another embodiment, the gas discharge portion may be directly or indirectly coupled to the injection port of the cap plate.

According to another embodiment, the injection port may be a through hole (or in other words cavity) formed in the cap plate. The through hole may extend in a direction towards the electrode assembly.

According to another embodiment, the gas discharge portion and the injection port may be fluidically connected such that generated gas can be discharged through the gas discharge portion and the injection port connected to each other.

According to one embodiment, the gas discharge portion may include a gas flow path pipe coupled to the injection port, the gas flowing through the gas flow path pipe, a pressure control member movable according to a pressure of the gas, and a housing accommodating the gas flow path pipe. In other words, the gas flow path pipe may be connected to the injection port such that generated gas is allowed to flow through the gas flow path pipe and to be discharged through the injection port. In other words, the pressure control member may be disposed inside the injection port and may move depending on the pressure of the gas. The housing may be disposed under the injection (e. g. on a side of the cap plate facing the electrode assembly) port of the cap plate and may accommodate the gas flow path pipe.

According to another embodiment, the pressure control member may be movable to open or close (e. g. seal) the injection port. According to another embodiment, the pressure control member may be configured to be movable between a first position and a second position according to the pressure of the gas. In the first position, a flow path from an inside of the secondary battery to an outside may be interrupted or blocked (sealed) so that no flow can occur in this direction (both from the outside to the inside and from the inside to the outside). In the second position, a flow path from the inside of the battery to the surroundings is established (e. g. opened) so that a flow can occur from the inside to the outside in this direction.

According to another embodiment, the gas flow path pipe may include a flow path inlet through which the gas flows into the opening of the case, a flow path outlet through which the gas is discharged to another opening in contact with the injection port, and a backflow prevention membrane at the flow path inlet to prevent backflow of the electrolyte. In other words, the gas may flow through the flow path inlet into the opening of the case or into the injection port. For example, the flow path inlet may be fluidically connected to an inside of the secondary battery and to the flow path pipe. In other words, the gas may be discharged through the flow path outlet to another opening in contact with the injection port. The other opening may be fluidically connected to the injection port and the flow path pipe. The other opening may include an inlet opening of the injection port. The backflow may refer to a flow direction of generated gas directed to an inside of the secondary battery. The other opening may be an opening of the injection port, e. g. fluidically connected to an environment of the battery, or of the cap plate.

According to another embodiment, the gas flow path pipe may be U-shaped.

According to another embodiment, the gas flow path pipe may be M-shaped.

According to another embodiment, if the pressure of the gas is less than a critical pressure, the pressure control member may seal the flow path outlet. In other words, the pressure control member may be configured to seal the flow path outlet in a circumstance where the pressure of the generated gas is less than a critical or in other words, a predetermined pressure representing for example the critical pressure. This may correspond to the first position. The pressure control member may be disposed to contact the flow path outlet such that the flow path outlet is fully covered.

According to another embodiment, if the pressure of the gas is greater than or equal to the critical pressure, the pressure control member may be moved by the pressure of the gas, the pressure control member being spaced apart from the flow path outlet, and the gas may be discharged to the injection port through the flow path outlet. In other words, the pressure control member may be configured to be moved to open the flow path outlet in a circumstance where the pressure of the generated gas is greater than or equal to the predetermined pressure. This may correspond to the second position. In this circumstance, the pressure control member may be disposed to be spaced apart from the flow path outlet such that the flow path outlet is fully uncovered.

According to another embodiment, the pressure control member may include a metal ball within the injection port, the pressure control member may have a diameter larger than that of the flow path outlet. In other words, the injection port may include a through hole (e. g. cavity) in which the pressure control member is disposed. The injection port or its cavity may have a varying diameter. In other words, the injection port may define a cavity having a bulbous or spherical central section flanked by two narrower openings, one of which (e. g. an inlet opening) is connected to the flow path outlet and the other (e. g. an outlet opening) to an environment of the secondary battery. The other narrower opening may correspond to or may be connected to the other opening. The shape of the cavity may be referred to as a ball seat or a spherical chamber. Within this cavity, the metal ball may be positioned. The metal ball may have a diameter greater than that of the inlet and outlet openings (the two narrower openings), but smaller than a maximum inner central diameter of the cavity. This configuration allows the metal ball to be retained within the cavity while enabling selective sealing of the openings, depending on pressure or flow direction. For example, in the first position the ball may cover the inlet opening and in the second position the ball may uncover the inlet opening.

According to another embodiment, the injection port may include a blocking element configured to prevent the metal ball from covering the other narrower opening (e. g. the outlet opening) when gas is generated and the metal ball is moved. The blocking element may be, for example, one or more elongated struts arranged in a central region of the injection port (for example, with the largest diameter). These may protrude into the injection port (e. g. the cavity) from an inner side wall of the injection port, for example at least at two opposite arranged or three points arranged equidistantly along the circumference. In this way, they prevent the ball from moving any further without significantly reducing the flow cross-section, so that no blockage can occur.

According to another embodiment, a mass of the metal ball may be based on the critical pressure.

According to another embodiment, the pressure control member may include an elastic member on an upper side of the injection port, the elastic member being configured to contract or relax by the pressure (e. g. based on the pressure) of the gas, and a sealing member that moves by the pressure of the gas and seals the flow path outlet by an elastic force of the elastic member. In other words, the elastic member may be configured to contract or relax depending on the pressure exerted on it by the gas. The sealing member may be connected to the elastic member such that the elastic member is moved by the pressure of the gas due to the moved sealing member. For example, the elastic element may be relaxed in the first position so that the sealing member covers the flow path outlet. In the second position, pressure from the gas through the sealing member can act on the elastic member so that it is contracted, exposing the flow pipe. The elastic member may be disposed on an upper side of the injection port or in other words on a side of the of the injection port facing away from the electrode assembly. The elastic member may include a spring. The sealing member may be disposed in the injection port. The diameter of the sealing member may be larger than the diameter of the flow path outlet.

According to another embodiment, an elastic modulus of the elastic member may be based on the critical pressure.

According to another embodiment, if the pressure of the gas is less than the critical pressure, the sealing member may seal the flow path outlet. In other words, the sealing member may be configured to seal the flow path outlet in a circumstance where the pressure of the generated gas is less than a predetermined pressure. This may correspond to the first position. The sealing member may be disposed to contact the flow path outlet such that the flow path outlet is fully covered.

According to another embodiment, if the pressure of the gas is greater than or equal to the critical pressure, the sealing member may move by the pressure of the gas to be spaced apart from the flow path outlet to contract the elastic member, and the gas may be discharged to the injection port through the flow path outlet. In other words, the sealing member may be configured to be moved to open the flow path outlet in a circumstance where the pressure of the generated gas is greater than or equal to the predetermined pressure. This may correspond to the second position. In this circumstance, the sealing member may be disposed to be spaced apart from the flow path outlet such that the flow path outlet is fully uncovered.

According to another embodiment, the sealing member may include at least one of a bolt and a cork stopper.

According to another embodiment, the gas flow path pipe may include at least one of ceramic, zirconia, epoxy resin, polycarbonate, polysulfone, polyimide, polyoxymethylene, and polytetrapropylene.

Embodiments include a secondary battery module, including a plurality of secondary batteries, and a module frame configured to support the plurality of secondary batteries, wherein each of the secondary batteries includes an electrode assembly including a first electrode, a second electrode, and a separator, a case accommodating the electrode assembly, the case having an opening, a cap plate coupled to the opening of the case, the cap plate including an injection port into which an electrolyte is injected (e. g. is injectable), and a gas discharge portion coupled to the injection port of the cap plate, the gas discharge portion configured (e. g. being configured) to discharge gas generated inside the case.

The gas discharge portion may include a gas flow path pipe coupled to the injection port, the gas flowing through the gas flow path pipe, a pressure control member that moves according to a pressure of the gas, and a housing accommodating the gas flow path pipe.

The gas flow path pipe may include a flow path inlet through which the gas flows into the opening of the case, a flow path outlet through which the gas is discharged to another opening in contact with the injection port, and a backflow prevention membrane at the flow path inlet to prevent backflow of the electrolyte.

The pressure control member may include an elastic member with one end in contact with the module frame and another end at an upper side of the injection port, the elastic member being configured to contract or relax by the pressure of the gas, and a sealing member that moves by the pressure of the gas, the sealing member sealing the flow path outlet by an elastic force of the elastic member.

If the pressure of the gas is greater than or equal to a critical pressure, the sealing member may move by the pressure of the gas to be spaced apart from the flow path outlet to contract the elastic member, and the gas is discharged to the injection port through the flow path outlet.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.

Features will become apparent to those of ordinary skill in the art by describing in detail exemplary embodiments with reference to the attached drawings, in which:
FIG. 1 illustrates a perspective view of a secondary battery according to one or more embodiments of the present disclosure;
FIG. 2 illustrates a cross-sectional view of a secondary battery according to one or more embodiments of the present disclosure;
FIG. 3A and FIG. 3B illustrate enlarged views of the gas discharge portion according to one or more embodiments of the present disclosure;
FIG. 4 and FIG. 5 illustrate enlarged views of the gas discharge portion according to one or more other embodiments of the present disclosure;
FIG. 6 illustrates a perspective view of a secondary battery module according to one or more embodiments of the present disclosure;
FIG. 7 illustrates a cross-sectional view of a secondary battery module according to one or more embodiments of the present disclosure;
FIG. 8A and FIG. 8B illustrate enlarged views of the gas discharge portion according to one or more embodiments of the present disclosure; and
FIG. 9A and FIG. 9B illustrate enlarged views of the gas discharge portion according to one or more embodiments of the present disclosure.

### DETAILED DESCRIPTION

Example embodiments will now be described more fully hereinafter with reference to the accompanying drawings; however, they may be embodied in different forms and should not be construed as limited to one or more embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her embodiments in the best way.

The embodiments described in this specification and the configurations shown in the drawings are only some of the embodiments of the present disclosure and do not represent all of the aspects and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing particular embodiments and is not intended to be limiting of the present disclosure.

During use, a large amount of gas may be generated inside the secondary battery due to various causes, such as chemical reactions occurring within the secondary battery. In particular, in a case of using a high-nickel-based cathode material in a lithium-ion battery with high capacity and high energy, gas generation within the secondary battery may increase. Although a degassing process is included in the manufacturing process of the secondary battery to remove gases generated during manufacturing, it cannot remove a large amount of gas generated during use. Accordingly, a swelling phenomenon may occur as the internal pressure of the secondary battery increases due to gas generated during use of the secondary battery. The swelling phenomenon may cause rupture of the secondary battery, thereby reducing its safety and lifespan. In the present disclosure, a secondary battery 1 including a gas discharge portion 100 that improves this phenomenon is disclosed.

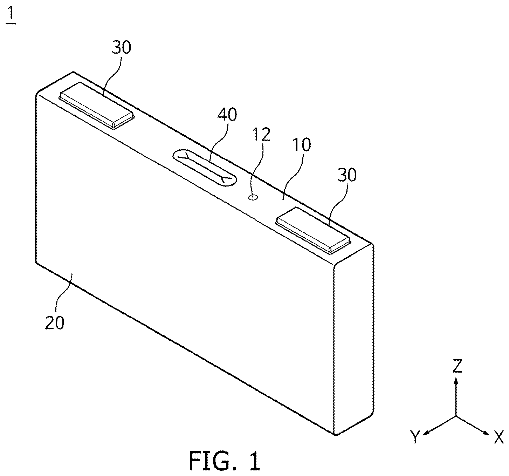

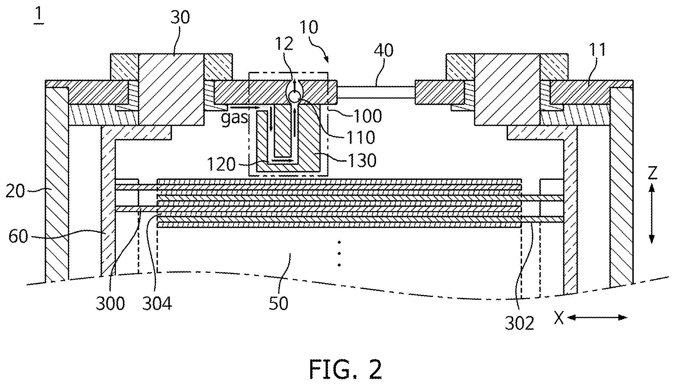

FIG. 1 illustrates a perspective view of a secondary battery 1 according to one or more embodiments of the present disclosure, and FIG. 2 illustrates a cross-sectional view of a secondary battery 1 according to one or more embodiments of the present disclosure.

Referring to FIG. 1, the secondary battery 1 may include an electrode assembly, a case 20 in which the electrode assembly is accommodated, a cap assembly 10 coupled to an opening of the case 20, a terminal 30, and a vent portion 40.

The secondary battery 1 according to one or more embodiments will be described as being a lithium-ion secondary battery having a prismatic shape as an example. However, the present disclosure may be applicable to various types of batteries such as a lithium polymer battery, a cylindrical battery, and the like.

The case 20 forms the overall appearance of the secondary battery 1, and may be made of a conductive metal such as aluminum, an aluminum alloy, or nickel-plated steel. The case 20 may have one side open to provide a space in which the electrode assembly is accommodated.

The case 20 may accommodate an electrode assembly therein. The electrode assembly may be formed by alternately stacking a first electrode 300, a separator 304, and a second electrode 302 formed in a thin plate shape or a film shape. There may be multiples of the first electrode 300, second electrode 302 and the separator 304. The electrode assembly may be of stack type. As another example, the electrode assembly may be a Z-stack electrode assembly in which the first electrode 300 and the second electrode 302 are inserted into opposite sides of a separator folded into a Z-stack. The first electrode 300 of the electrode assembly may serve as a positive electrode, and the second electrode 302 may serve as a negative electrode. The opposite is also possible.

The first electrode 300 may be formed by applying a first electrode active material such as a transition metal oxide on a first electrode substrate formed of a metal foil such as aluminum or an aluminum alloy, and may include a first electrode tab (or a first uncoated portion), which is a region in which the first electrode active material is not applied. The first electrode tab may serve as a current flow path between the first electrode 300 and the first current collector plate 60.

The second electrode may be formed by applying a second electrode active material such as graphite or carbon on a second electrode substrate formed of a metal foil such as a metal foil such as copper, a copper alloy, nickel, or a nickel alloy, and may include a second electrode tab (or a second uncoated portion), which is a region in which the second electrode active material is not applied. The second electrode tab may serve as a current flow path between the second electrode and the second current collector plate.

The separator may prevent a short circuit between the first electrode 300 and the second electrode 302 while allowing lithium ions to move. The separator may be configured of, for example, a polyethylene film, polypropylene film, polyethylene-polypropylene film, or other materials, but is not limited thereto.

A plurality of first electrode tabs and a plurality of second electrode tabs may be spaced apart from each other and may be disposed on an upper side of the electrode assembly. Herein, this is for convenience of description based on the illustrated case, and the position thereof may change in a case of being rotated left and right, or up and down.

The cap assembly 10 may seal an opening of the case 20. The cap assembly 10 may include a cap plate 11 (see FIG. 2), a terminal 30, an injection port 12, and a vent portion 40. The cap plate 11 may be coupled to the case 20. For example, the cap plate 11 may be welded to the case 20. The cap plate 11 may seal the opening of the case 20.

The cap plate 11 may include an injection port 12, a terminal 30, and a vent portion 40.

The injection port 12 may be formed on the cap plate 11. The electrolyte may be injected into the case 20 through the injection port 12. The injection port 12 may be sealed using a sealing member such as a stopper or the like after the electrolyte injection is completed.

The terminal 30 may be formed on the cap plate 11. The terminal 30 may include a first terminal and a second terminal. The first terminal may be electrically connected to the first electrode 300. The second terminal may be electrically connected to the second electrode.

The vent portion 40 may be formed on the cap plate 11. The vent portion 40 may be formed by coupling a vent member into a vent hole formed on the cap plate 11. The vent portion 40 may prevent explosion of the battery or a chain reaction of heating of other batteries disposed in close proximity to the battery. For example, the vent portion 40 may be configured to open in a case where the internal pressure of the battery exceeds a predetermined critical pressure. The critical pressure may be set differently depending on the application field, material, and purpose of the battery. As another example, the vent portion 40 may be configured to open in a case where the internal temperature exceeds a predetermined threshold temperature.

The secondary battery 1 may be a lithium battery cell, a sodium battery cell, or the like. However, the secondary battery 1 includes all batteries capable of repeatedly providing electricity through charging and discharging.

For convenience of description based on the secondary battery shown in FIG. 1, the positions of the cap plate 11, the injection port 12, the terminal 30, and the vent portion 40 may change in a case of rotating left and right or up and down depending on the type of the secondary battery 1.

Referring to FIG. 2, the secondary battery 1 may include a cap assembly 10, a case 20, a terminal 30, a vent portion 40, an electrode assembly 50, a current collector 60, and a gas discharge portion 100.

The cap assembly 10 of the secondary battery 1 may include a cap plate 11 covering an opening of the case 20. The case 20 and the cap plate 11 may be made of a conductive material. The terminal 30 electrically connected to the positive electrode or the negative electrode may be installed to protrude outward through the cap plate 11. The terminal 30 protruding to the outside of the cap plate 11 may be fixed to the cap plate 11. For example, the terminal 30 may have a rivet structure to be riveted to the cap plate 11 or may be welded to the cap plate 11. Each terminal 30 may be electrically connected to the current collector 60 including a positive electrode current collector or a negative electrode current collector. For example, the terminal 30 may be welded and coupled to the positive and negative electrode current collectors 60. However, the terminal 30 may be integrally formed with the positive and negative electrode current collectors 60.

The cap plate 11 may include a vent portion 40 formed with a notch. The vent portion 40 may be configured to open in a case where the internal pressure of the battery exceeds a predetermined critical pressure.

The cap plate 11 may include an injection port 12 for injecting an electrolyte. For example, an injection port 12 to which a pressure control member 110 may be connected may be formed in the cap plate 11. The injection port 12 may be a through hole formed in the cap plate 11. The injection port 12 may be formed to inject an electrolyte into the case 20 after the cap plate 11 is coupled to the opening of the case 20 to seal the case 20.

The cap assembly 10 may include a gas discharge portion 100 for discharging gas generated inside the secondary battery 1. For example, the gas discharge portion 100 may be coupled to the injection port 12 of the cap plate 11, and the gas discharge portion 100 may discharge gas generated inside the case 20.

The gas discharge portion 100 may include a pressure control member 110, a gas flow path pipe 120, and a housing 130. The pressure control member 110 may be disposed inside the injection port 12 and may move depending on the pressure of the gas. For example, in a case where the amount of gas generated inside the secondary battery 1 increases and the internal pressure of the secondary battery 1 increases, the pressure control member 110 may move upward in the Z-axis direction inside the injection port 12. In a case where the amount of gas increases, high-pressure gas may flow into the gas flow path pipe 120, and the gas may flow in the direction of the injection port 12 by flowing through the gas flow path pipe 120. Accordingly, the pressure control member 110 disposed in the injection port 12 may be raised by the pressure of the gas.

The housing 130 may be disposed under the injection port 12 of the cap plate 11 and may accommodate the gas flow path pipe 120. The material of the housing 130 may be formed of carbon black, but the material may vary.

Because the secondary battery 1 includes the gas discharge portion 100, gas generated inside the secondary battery may be easily discharged. By discharging the gas, the swelling phenomenon of the secondary battery may be reduced, which may improve the stability and lifespan of the secondary battery. By using the injection port 12 as a portion of the gas discharge flow path, a gas discharge structure may be implemented more simply.

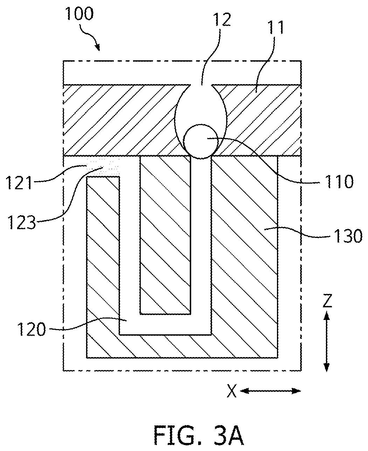

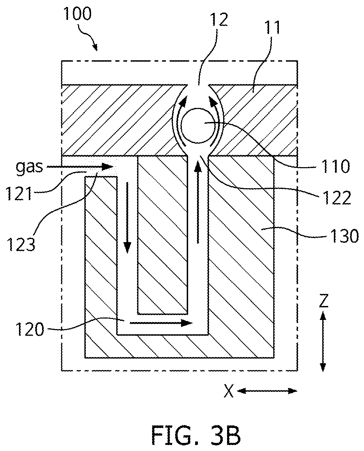

Components and operations of the gas discharge portion 100 will be described in detail with reference to FIG. 3A and FIG. 3B.

FIG. 3A and FIG. 3B illustrate enlarged views of the gas discharge portion 100 according to one or more embodiments of the present disclosure.

Referring to FIG. 3A and FIG. 3B, the gas flow path pipe 120 may include a flow path inlet 121, a flow path outlet 122, and a backflow prevention membrane 123. As shown, the gas flow path pipe 120 may be formed in a U-shape. For example, because the electrolyte inside the secondary battery has a higher density than gas, most of the electrolyte may be positioned under the secondary battery (e. g. in a lower portion of the secondary battery or below the gas discharge portion). However, depending on the position of the secondary battery 1, some of the electrolyte may flow back through the gas flow path pipe 120. To prevent this problem, the gas flow path pipe 120 may be formed in a U-shape. The U-shaped gas flow path pipe 120 may minimize backflow of the electrolyte even in a case where the secondary battery 1 is positioned in the reverse direction. As described above, while the electrolyte of the secondary battery 1 is prevented from leaking by the U-shaped gas flow path pipe 120, only the gas inside the secondary battery 1 may be discharged. However, all flow paths through which gas may pass through the housing 130 and be discharged to the injection port 12 may be in the form of the gas flow path pipe 120.

The gas flow path pipe 120 may be made of an insulating material. For example, the gas flow path pipe 120 may be made of a composition or compound containing at least one of ceramic (Al₂O₃), zirconia, epoxy resin, polycarbonate (PC), polysulfone (PSU), polyimide (PI), polyoxymethylene (POM), and polytetra propylene (PTFE), but the present disclosure is not limited thereto.

The flow path inlet 121 may be one surface of the gas flow path pipe 120 that is opened to the inside of the case 20. That is, the flow path inlet 121 is an inlet area of the gas flow path pipe 120, into which gas may flow. Meanwhile, the flow path outlet 122 may be the other surface (e.g., other end) of the gas flow path pipe 120 that is open in contact with (e.g., in fluid communication with) the injection port 12. That is, the flow path outlet 122 is an outlet area of the gas flow path pipe 120 through which gas may be discharged. Herein, the discharged gas may be discharged to the outside of the secondary battery 1 through the injection port 12.

The backflow prevention membrane 123 may be disposed at the flow path inlet 121 to prevent backflow of the electrolyte. The backflow prevention membrane 123 may include a porous membrane. Herein, the porous membrane may be made of a composition or a compound containing at least one of polycarbonate (PC), polysulfone (PSU), polyimide (PI), polyoxymethylene (POM), and polytetra propylene (PTFE), but other materials are possible.

The pressure control member 110 may be disposed in the injection port 12. For example, the pressure control member 110 may include a metal ball having a diameter larger than the diameter of the flow path outlet 122. Accordingly, in a case where gas is not generated in the secondary battery 1, the metal ball, which is the pressure control member 110, may seal the flow path outlet 122.

In addition, the mass of the metal ball, which is the pressure control member 110, may be determined based on the critical pressure. The critical pressure is a pressure level set during manufacturing and/or testing of the secondary battery 1, and may be a predetermined pressure level that reduces the stability and lifespan of the secondary battery 1. For example, the mass of the metal ball is determined according to a predetermined critical pressure, and the mass of the metal ball may increase as the critical pressure increases. In a case where the gas generated inside the secondary battery 1 increases, the overall pressure inside the secondary battery 1 may increase due to the pressure of the gas. For example, the pressure inside the manufactured secondary battery 1 may be generally 0.01 to 0.07 MPa. In this case, the atmospheric pressure is about 0.1 MPa, which is greater than the internal pressure of the secondary battery 1. Thereafter, as the secondary battery 1 is used, the pressure of the gas generated inside the secondary battery 1 may be greater than the atmospheric pressure. In this case, the pressure of the gas generated inside the secondary battery 1 may reach a critical pressure. At this time, since the metal ball moves apart from the flow path outlet 122, the gas may be discharged to the outside of the secondary battery 1 through the injection port 12.

As an example, as shown in FIG. 3A, in a case where the pressure of the gas generated inside the secondary battery 1 is less than the critical pressure, the metal ball, which is the pressure control member 110, may seal the flow path outlet 122.

Meanwhile, as shown in FIG. 3B, in a case where the pressure of the gas generated inside the secondary battery 1 is greater than or equal to the critical pressure, the metal ball, which is the pressure control member 110, may be moved by the pressure of the gas. That is, the pressure control member 110 may be spaced apart from the flow path outlet 122. Accordingly, the gas may be discharged to the injection port 12 through the flow path outlet 122. The gas generated inside the secondary battery 1 may be discharged to the outside of the secondary battery 1 through the injection port 12. For example, in a case where the pressure of the gas is higher than or equal to the critical pressure, the metal ball, which is the pressure control member 110, may be separated from the flow path outlet 122 by rising in the Z-axis direction within the injection port 12. Accordingly, the gas may be discharged to the outside of the secondary battery 1 through the injection port 12.

Thereafter, as the gas generated inside the secondary battery 1 is discharged to the outside, the pressure of the gas may reach less than the critical pressure again. In this case, the metal ball, which is the pressure control member 110, may descend in the Z-axis direction and seal the flow path outlet 122 again.

As described above, the critical pressure may be preset by the pressure control member 110, and in a case where the critical pressure is reached, the gas inside the secondary battery 1 may be easily discharged.

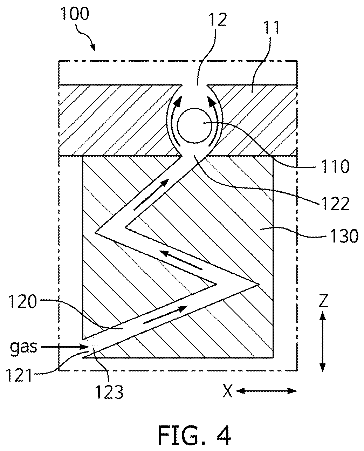

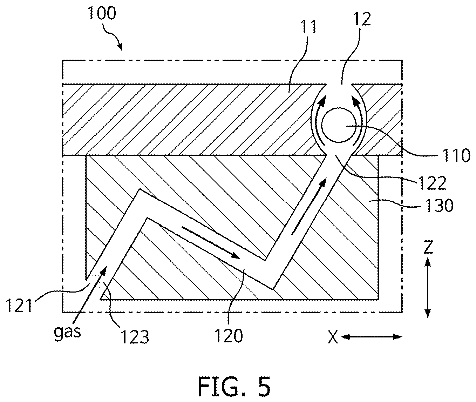

FIG. 4 and FIG. 5 illustrate enlarged views of the gas discharge portion 100 according to one or more embodiments of the present disclosure. For convenience of description, the gas discharge portion 100 of FIG. 4 and FIG. 5 will be described focusing on differences from those described in FIG. 3A and FIG. 3B.

Referring to FIG. 4 and FIG. 5, the gas flow path pipe 120 may be formed in an M-shape (or a W-shape) (e.g., a zigzag shape). The M-shaped gas flow path pipe 120 may minimize backflow of the electrolyte even in a case where the secondary battery 1 is positioned in the reverse direction. The M-shaped gas flow path pipe 120 may reduce the flow rate of gas. In addition, since the pressure change of the gas flowing through the injection port 12 is reduced, the stability of the gas discharge portion 100 may be improved. On the other hand, compared to the straight or U-shaped gas flow path pipe 120, the M-shaped gas flow path pipe 120 has a complex flow path. Accordingly, the M-shaped gas flow path pipe 120 may prevent substances other than gas from flowing in and precipitated into the flow path. While the electrolyte of the secondary battery 1 is prevented from leaking by the M-shaped gas flow path pipe 120, only the gas inside the secondary battery 1 may be discharged.

In one or more embodiments, as shown in FIG. 4, the flow path inlet 121 may be disposed on the lower side of the housing 130 (e. g. a side facing the electrode assembly). The gas flow path pipe 120 may be formed in a zigzag shape while extending in the X-axis direction and rising in the Z-axis direction. Accordingly, the flow path outlet 122 of the gas flow path pipe 120 may be in contact with the injection port 12.

In one or more embodiments, as shown in FIG. 5, the flow path inlet 121 may be disposed on the lower side of the housing 130. The gas flow path pipe 120 may have a zigzag shape while the flow path extends in the Z-axis direction and the flow path outlet 122 is in contact the injection port 12. However, the present disclosure is only an example, and the gas discharge portion 100 may include various types of gas flow path pipes 120.

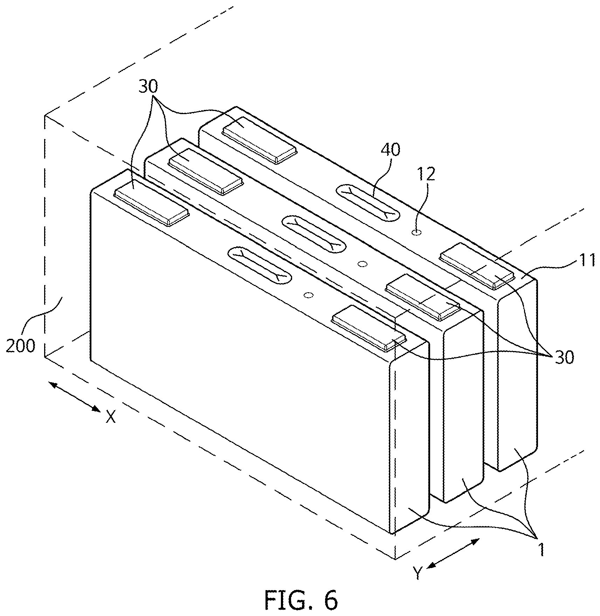

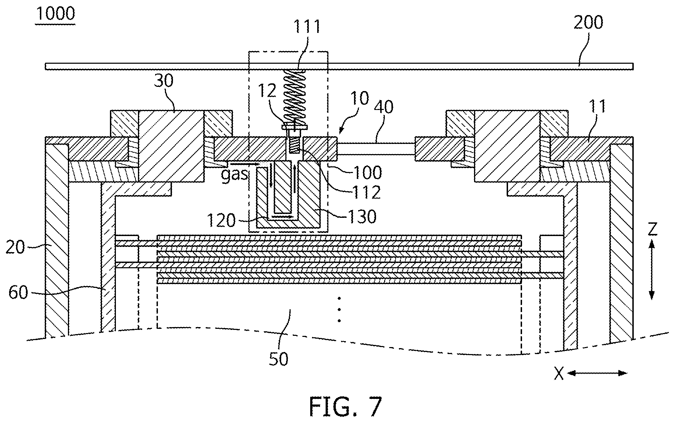

FIG. 6 illustrates a perspective view of a secondary battery module 1000 according to one or more embodiments of the present disclosure, and FIG. 7 illustrates a cross-sectional view of a secondary battery module 1000 according to one or more embodiments of the present disclosure. The secondary battery 1 of FIG. 6 may be the same as or similar to the secondary battery 1 of FIG. 1 to FIG. 5. Therefore, for better understanding and ease of description, differences from those described in FIG. 1 to FIG. 5 will be mainly described.

Referring to FIG. 6 and FIG. 7, the secondary battery module 1000 may include a plurality of secondary batteries 1 and a module frame 200 supporting the secondary batteries 1. For example, the secondary batteries 1 may be accommodated in the module frame 200 in a stacked form (e.g., along the Y-axis direction).

In one or more embodiments, each of the secondary batteries 1 may include a cap assembly 10 including an injection port 12, a case 20, a terminal 30, and a vent portion 40. Herein, the cap assembly 10 may include a cap plate 11 and a gas discharge portion 100. The injection port 12 may be formed on the cap plate 11.

In one or more embodiments, the gas discharge portion 100 may include a pressure control member 110, a gas flow path pipe 120, and a housing 130. The pressure control member 110 may include an elastic member 111 and a sealing member 112. The elastic member 111 may be disposed on the upper side of the injection port 12, and the elastic member 111 may contract or relax by the pressure of the gas. Herein, the elastic member 111 may include a spring, but any elastic material may be used. For example, one surface of the elastic member 111 may be in contact with the module frame 200. Meanwhile, the other surface of the elastic member 111 may be in contact with the sealing member 112.

The sealing member 112 may be disposed in the injection port 12 and may be moved by the pressure of the gas. The sealing member 112 may be spaced apart from the flow path outlet 122 to contract the elastic member 111. For example, one surface of the sealing member 112 may be in contact with the elastic member 111. Meanwhile, the other surface of the sealing member 112 may seal the flow path outlet 122. In some embodiments, the sealing member 112 may indirectly seal the flow path outlet 122 by sealing the injection port 12. The sealing member 112 may include a bolt and/or a cork stopper.

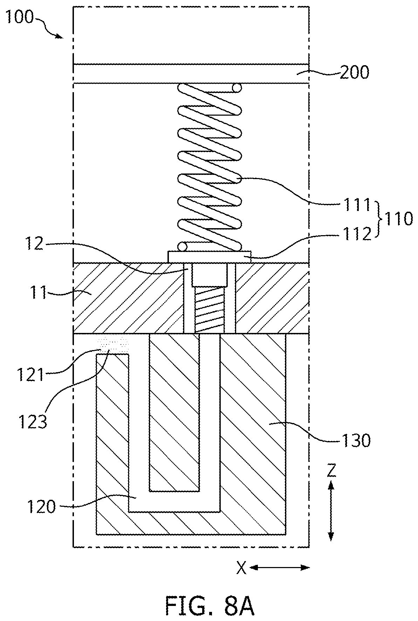

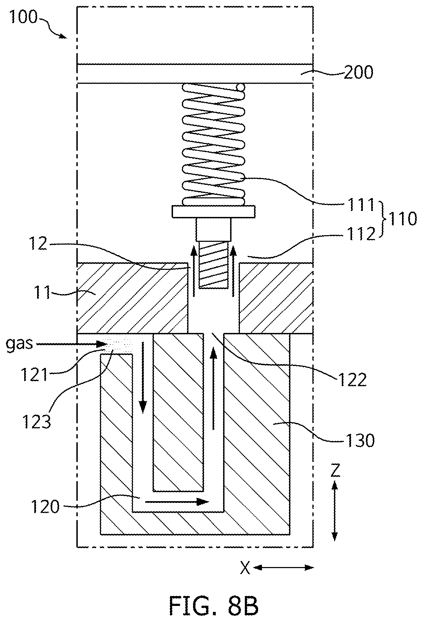

Components and operations of the pressure control member 110 will be described in detail with reference to FIG. 8A and FIG. 8B.

FIG. 8A and FIG. 8B illustrate enlarged views of the gas discharge portion 100 according to one or more embodiments of the present disclosure.

Referring to FIG. 8A and FIG. 8B, the gas flow path pipe 120 may be formed in a U-shape, but as shown in FIG. 4 and FIG. 5, may be formed in an M-shape (or W-shape or a zigzag shape). However, the present disclosure is only an example, but the gas flow path pipe 120 may take other forms.

In one or more embodiments, the pressure control member 110 may include an elastic member 111 and a sealing member 112 including a bolt. The elastic modulus of the elastic member 111 may be determined based on a critical pressure. For example, the elastic modulus of the elastic member (111) is determined according to a preset critical pressure, and the elastic modulus may increase as the critical pressure increases. Furthermore, the mass of the sealing member 112 may also be determined based on the critical pressure. The mass of the bolt, which is the sealing member 112, may be determined in consideration of the elastic modulus.

The diameter of the sealing member 112 may be larger than the diameter of the flow path outlet 122. Accordingly, in a case where no gas is generated in the secondary battery 1, the sealing member 112 may seal the flow path outlet 122.

In one or more embodiments, in a case where the pressure of the gas generated inside the secondary battery 1 is less than the critical pressure, as shown in FIG. 8A, the bolt, which is the sealing member 112, may seal the flow path outlet 122.

Meanwhile, as shown in FIG. 8B, in a case where the pressure of the gas generated inside the secondary battery 1 is greater than or equal to the critical pressure, the bolt, which is the sealing member 112, may be moved by the pressure of the gas. As the bolt, which is the sealing member 112, rises in the Z-axis direction, the bolt may be spaced apart from the flow path outlet 122. At the same time, the elastic member 111 fixed to one surface of the module frame 200 may be contracted due to elastic force. Accordingly, the gas may be discharged to the injection port 12 through the flow path outlet 122. The gas generated inside the secondary battery 1 may be discharged to the outside of the secondary battery 1 through the injection port 12.

As the gas generated inside the secondary battery 1 is discharged to the outside, the pressure inside the secondary battery 1 may reach less than the critical pressure again. In this case, the bolt, which is the sealing member 112, may be lowered in the Z-axis direction, while the elastic member 111 may be relaxed. For example, the bolt, which is the sealing member 112, may seal the flow path outlet 122 again.

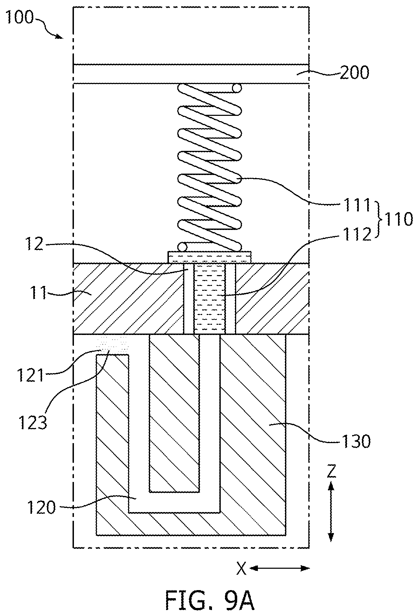

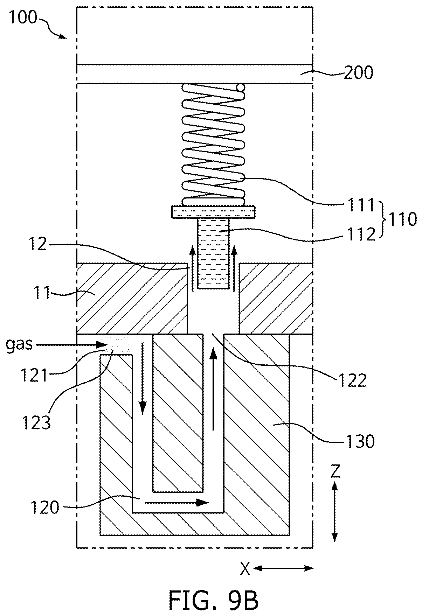

FIG. 9A and FIG. 9B illustrate enlarged views of the gas discharge portion 100 according to one or more embodiments of the present disclosure.

Referring to FIG. 9A, the pressure control member 110 may include an elastic member 111 and a sealing member 112 including a cork stopper. Herein, the elastic modulus of the elastic member 111 may be determined based on a critical pressure. For example, the elastic modulus of the elastic member (111) is determined according to a preset critical pressure, and the elastic modulus may increase as the critical pressure increases. Furthermore, the mass of the sealing member 112 may also be determined based on the critical pressure. The mass of the cork stopper, which is the sealing member 112, may be determined in consideration of the determined elastic modulus.

In one or more embodiments, as shown in FIG. 9A, in a case where the pressure of the gas generated inside the secondary battery 1 is less than the critical pressure, the cork stopper, which is the sealing member 112, may seal the flow path outlet 122.

Meanwhile, as shown in FIG. 8B, in a case where the pressure of the gas generated inside the secondary battery 1 is greater than or equal to the critical pressure, the cork stopper, which is the sealing member 112, may be moved by the pressure of the gas. As the cork stopper, which is the sealing member 112, rises in the Z-axis direction, the cork stopper may be spaced apart from the flow path outlet 122. The elastic member 111 fixed to one surface of the module frame 200 may be contracted due to elastic force. Accordingly, the gas may be discharged to the injection port 12 through the flow path outlet 122. The gas generated inside the secondary battery 1 may be discharged to the outside of the secondary battery 1 through the injection port 12.

As the gas generated inside the secondary battery 1 is discharged to the outside, the pressure of the gas may reach less than the critical pressure again. The cork stopper, which is the sealing member 112, may be lowered in the Z-axis direction, while the elastic member 111 may be relaxed at the same time. The cork stopper, which is the sealing member 112, may seal the flow path outlet 122 again.

During use, a large amount of gas may be generated inside the secondary battery due to various causes, such as chemical reactions occurring within the secondary battery. The internal pressure of the secondary battery may increase due to the generated gas, causing a swelling phenomenon. This swelling phenomenon may cause rupture of the secondary battery and reduce stability and lifespan.

As described above, in the present disclosure, because the secondary battery 1 includes the gas discharge portion 100, gas generated inside the secondary battery may be easily discharged. By discharging the gas, the swelling phenomenon of the secondary battery may be reduced, which may improve the stability and lifespan of the secondary battery.

Additionally, a critical pressure may be set by the pressure control member 110, and in a case where the critical pressure is reached, gas inside the secondary battery 1 may be easily discharged.

Although the present disclosure has been described above with respect to embodiments thereof, the present disclosure is not limited thereto. Various modifications and variations can be made thereto by those skilled in the art within the present disclosure and the equivalent scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery (1), comprising:
an electrode assembly (50) including a first electrode (300), a second electrode (302), and a separator (304);
a case (20) configured to accommodate the electrode assembly (50) and having an opening;
a cap plate (11) coupled to the opening of the case (20), the cap plate (11) including an injection port (12) into which an electrolyte is injectable; and
a gas discharge portion (100) coupled to the injection port (12) of the cap plate (11), the gas discharge portion (100) being configured to discharge gas generated inside the case (20).

2. The secondary battery (1) as claimed in claim (1), wherein the gas discharge portion (100) includes:
a gas flow path pipe (120) coupled to the injection port (12) such that the gas can flow through the gas flow path pipe (120);
a pressure control member (110) movable according to a pressure of the gas; and
a housing (130) accommodating the gas flow path pipe (120).

3. The secondary battery (1) as claimed in claim 2, wherein the gas flow path pipe (120) includes:
a flow path inlet (121) through which the gas is flowable into the opening of the case (20);
a flow path outlet (122) through which the gas is dischargeable to another opening in contact with the injection port (12); and optionally
a backflow prevention membrane (123) at the flow path inlet (121) configured to prevent backflow of the electrolyte.

4. The secondary battery (1) as claimed in claim 3, wherein the gas flow path pipe (120) is U-shaped.

5. The secondary battery (1) as claimed in claim 3, wherein the gas flow path pipe (120) is M-shaped.

6. The secondary battery (1) as claimed in any one of claims 3 to 5, wherein if the pressure of the gas is less than a critical pressure, the pressure control member (110) is configured to seal the flow path outlet (122).

7. The secondary battery (1) as claimed in claim 6, wherein if the pressure of the gas is greater than or equal to the critical pressure,
the pressure control member (110) is configured to be moved by the pressure of the gas, such that the pressure control member (110) is spaced apart from the flow path outlet (122), and
the gas is dischargeable to the injection port (12) through the flow path outlet (122).

8. The secondary battery (1) as claimed in any one of claims 3 to 7, wherein the pressure control member (110) includes a metal ball within the injection port (12), the pressure control member (110) having a diameter larger than that of the flow path outlet (122).

9. The secondary battery (1) as claimed in claim 8, wherein a mass of the metal ball is based on a critical pressure.

10. The secondary battery (1) as claimed in any one of claims 3 to 9, wherein the pressure control member (110) includes:
an elastic member (111) on an upper side of the injection port (12), the elastic member (111) being configured to contract or relax by the pressure of the gas; and
a sealing member (112) that is configured to be moved by the pressure of the gas and to seal the flow path outlet (122) by an elastic force of the elastic member (111).

11. The secondary battery (1) as claimed in claim 10, wherein an elastic modulus of the elastic member (111) is based on a critical pressure.

12. The secondary battery (1) as claimed in claim 10 or 11, wherein if the pressure of the gas is less than the critical pressure, the sealing member (112) is configured to seal the flow path outlet (122).

13. The secondary battery (1) as claimed in claim 12, wherein if the pressure of the gas is greater than or equal to the critical pressure:
the sealing member (112) is configured to be moved by the pressure of the gas to be spaced apart from the flow path outlet (122) to contract the elastic member (111), and
the gas is dischargeable to the injection port (12) through the flow path outlet (122).

14. The secondary battery (1) as claimed in any one of claims 10 to 13, wherein the sealing member (112) includes at least one of a bolt and a cork stopper.

15. The secondary battery (1) as claimed in any one of claims 2 to 14, wherein the gas flow path pipe (120) includes at least one of ceramic, zirconia, epoxy resin, polycarbonate, polysulfone, polyimide, polyoxymethylene, and polytetrapropylene.
